# EUROPÄISCHE PATENTSCHRIFT

(11) **EP 1 698 995 B1**
(45) Veröffentlichungstag und Bekanntmachung des Hinweises auf die Patenterteilung: **02.01.2008**
(21) Anmeldenummer: 05028465.2
(22) Anmeldetag: 24.12.2005
(51) Int. Cl.: G06K 7/10

(54) **Identifikationseinrichtung**
Identification device
Dispositif d'identification

(30) Priorität: 01.03.2005 DE 102005009309
(43) Veröffentlichungstag der Anmeldung: 06.09.2006
(73) Patentinhaber: SICK AG, 79183 Waldkirch (DE)
(72) Erfinder: Nübling, Ralf Ulrich, 79211 Denzlingen (DE)
(74) Vertreter: Ludewigt, Christoph

(56) Entgegenhaltungen:
- US-A- 5 872 354
- US-B1- 6 801 260

## Beschreibung

Die Erfindung betrifft eine Identifikationseinrichtung, insbesondere einen Codeleser, zur Erfassung von ein- und/oder von zweidimensionalen Codes mit einem in einem Gehäuse angeordneten ortsauflösenden Lichtempfänger und einer diesem zugeordneten ebenfalls im Gehäuse eingebauten Abbildungsoptik.

Bei den aus dem Stand der Technik bekannten Identifikationseinrichtungen wird von der Abbildungsoptik ein Abbild von einem in der Objektebene vorhandenen Code entworfen. In dieser Bildebene befindet sich der ortsauflösende Lichtempfänger, bei welchem mehrere Lichtempfängerpixel zeilen- oder matrixförmig angeordnet sind.

Die im Code und demzufolge auch im Abbild des Codes vorhandenen unterschiedlichen Kontraste, erzeugen in den einzelnen Lichtempfängerpixeln unterschiedliche Photoströme, aus denen dann über eine Signalverarbeitung der Codeinhalt identifizierbar ist.

Derartige Codierungen werden in vielseitigen Anwendungsgebieten eingesetzt, so zum Beispiel zur Identifizierung und Steuerung einzelner Objekte in der Fördertechnik. Dabei ist der Code nicht auf eine bestimme Codeart beschränkt, sondern umfasst alle, mit einer Bildverarbeitungseinrichtung erkennbaren Varianten von Informationsträgern.
Von leistungsfähigen Identifikationseinrichtungen wird heute erwartet, dass immer größere Informationsmengen auf möglichst kleinen Codeflächen gelesen werden können. Dies bedeutet, dass von der Identifikationseinrichtung eine hohe Ortsauflösung gefordert wird. Insbesondere dann, wenn sich der Code noch zusätzlich innerhalb eines großen Tiefenmessbereiches befindet, sind an die Identifikationseinrichtung hohe Anforderungen gestellt. Eine weitere Anforderung an leistungsstarke Identifikationseinrichtungen besteht in der hohen Lesegüte, welche unter anderem auch eine lichtstarke Abbildungsoptik erforderlich macht. Diese beiden Bedingungen, d. h. großer Tiefenmessbereich und gleichzeitig lichtstarke Abbildungsoptik, setzen voraus, dass die Identifikationseinrichtung mit einem automatischen Fokussierungssystem ausgerüstet sein muss.

Bei den bekannten Identifikationseinrichtungen mit automatischem Fokussierungssystem wird unterschieden zwischen:
1) einer reinen Entfernungseinstellung auf unterschiedliche Objektabstände durch Anpassung der optischen Bildschnittweite und
2) einer Veränderung der Brennweite der Abbildungsoptik (Zoom-Eigenschaft) zur Beeinflussung des Abbildungsmaßstabes bei unterschiedlichen Objektabständen.

Im Falle der Entfernungseinstellung wird dazu zum Beispiel die gesamte Abbildungsoptik in Richtung der optischen Achse bewegt, während der ortsauflösende Lichtempfänger stationär positioniert ist. Üblicherweise wird dazu mit Hilfe eines Servomotors die in einer Fassung montierte Abbildungsoptik zum Beispiel durch Drehung linear verschoben. Bei lichtstarken langbrennweitigen Empfangsobjektiven ist, aufgrund der relativ großen Masse der dabei zu bewegenden Komponenten, ein hoher Energieaufwand erforderlich. Auch wegen der mechanischen Belastung im Bereich der Lagerungen sowie beim kontinuierlichen Einsatz über einen längeren Zeitraum hinweg, stoßen derartige Systeme oft sehr schnell an ihre Grenzen. Darüber hinaus benötigt dieser Fokussiervorgang in der Regel relativ viel Zeit und ist deshalb nicht in der Lage, auf schnell wechselnde Objektabstände zu reagieren.

In einer weiteren Ausführungsart der Entfernungseinstellung erfolgt die Veränderung dadurch, dass die Abbildungsoptik stationär angeordnet ist, während der ortsauflösende Lichtempfänger gegebenenfalls mitsamt der ihn tragenden Leiterplatte inklusive weiterer elektronischer Bauteile in Richtung der optischen Achse verstellbar gelagert ist. Neben der bei dieser Entfernungseinstellung auftretenden mechanischen Belastung des Lichtempfängers inklusive weiterer elektrischer Komponenten ist es zusätzlich noch notwendig, dass eine mehradrige elektrische Verbindung kontinuierlich einer Bewegung ausgesetzt wird. Da diese Entfernungseinstellung über die Lebensdauer einer Identifikationseinrichtung betrachtet im Bereich von 10⁷ bis 10⁹ Zyklen liegen können, sind Unterbrechungen im Bereich der elektrischen Verbindung oder Zerstörungen an den mechanisch beanspruchten Komponenten nicht auszuschließen.

Aus der WO 93/14470 ist ein transportables optisches Codelesesystem bekannt, bei welchem die optische Bildschnittweite, d. h. der wirksame Abstand zwischen der Abbildungsoptik und dem ortsauflösenden Lichtempfänger, zum Zwecke der Fokussierung veränderbar ist. Dies wird nach der WO 93/14470 dadurch erreicht, dass der Strahlengang zwischen der Abbildungsoptik und dem ortsauflösenden Lichtempfänger z-förmig gefaltet ist. Ein optisches Element bei dieser Faltung des Strahlenganges ist ein planer Umlenkspiegel, der an der Koppel eines Gelenkviereckes angebracht ist. Die Vorteile einer derartigen Entfernungseinstellung, bei der sowohl die Abbildungsoptik als auch der ortsauflösende Lichtempfänger ortsfest im Gehäuse fixiert sein können, werden durch eine sehr aufwendige und teuere Konstruktion bei dem Gelenkviereck wieder zunichte gemacht. Der Grund liegt darin, dass bei einem derartigen Gelenkviereck die Koppel, an dem der Umlenkspiegel angebracht ist, an beiden Enden drehbar mit den beiden Lenkern verbunden sein muss. Darüber hinaus ist es notwendig, dass auch die beiden Lenker wiederum drehbar mit der Gerätebasis verbunden sein müssen. Es sind also für die Koppel und den beiden Lenkern vier separate Drehgelenke notwendig. Insbesondere dann, wenn die Abbildungsoptik relativ kurzbrennweitig ist, ist es zur genauen Fokussierung notwendig, dass zum Teil sehr kleine Wegänderungen im Bereich von wenigen µm exakt und mit guter Reproduzierbarkeit durchgeführt werden. Um dies sicherstellen zu können, müssen an die vier Drehgelenke sehr hohe Anforderungen hinsichtlich Steifigkeit und Spielfreiheit gestellt werden, die auch über sehr viele Bewegungszyklen erhalten bleiben müssen. Dadurch sind die Kosten, als auch der erforderliche Platzbedarf für diese Gelenkviereckskonstruktion sehr hoch.

Des Weiteren ist aus der US 6,801,260 eine Vorrichtung bekannt, bei der ein Umlenkspiegel, welcher zwischen einem ortsfesten Linsensystem und einem Bildsensor angeordnet ist, entweder parallel verschoben oder verschwenkt wird. Auf diese Weise wird zur Anpassung der Abbildungsoptik an verschiedene Objektabstände die bildseitige Schnittweite so verändert, dass Objekte mit unterschiedlichem Objektabstand immer scharf auf dem Bildsensor abgebildet werden.
Eine derartige reine Entfernungsanpassung auf unterschiedliche Objektabstände hat jedoch den Nachteil, dass weit entfernte Objekte in einem kleineren Maßstab auf dem Bildsensor abgebildet werden. In diesen Fällen reduziert sich dann zwangsläufig mit zunehmendem Objektabstand die Fähigkeit, kleine Objekte fehlerfrei erkennen zu können.

Um dies zu vermeiden, ist es bei derartigen Identifikationseinrichtungen erforderlich, in Abhängigkeit vom aktuellen Objektabstand, neben der Entfernungseinstellung auch den Abbildungsmaßstab, d. h. die Brennweite der Abbildungsoptik zu verändern.

Der Erfindung liegt die Aufgabe zugrunde, ein automatisches Fokussiersystem zu schaffen, das zur optimalen Identifikation von Objekten in der Lage ist, eine Entfernungsanpassung und gleichzeitig auch eine zumindest teilweise Anpassung des Abbildungsmaßstabes zu ermöglichen, die kostengünstig herstellbar ist und schnell sowie verschleißfrei auf unterschiedliche Objektabstände reagieren kann.

Erfindungsgemäß wird diese Aufgabe mit den Merkmalen gemäß Anspruch 1 gelöst.
Zweckmäßige Ausgestaltungen und Weiterbildungen sind in den Unteransprüchen charakterisiert.

Zur Lösung dieser Fokussieraufgabe sieht die Erfindung vor, dass die Identifikationseinrichtung in einem Gehäuse einen ortsauflösenden Lichtempfänger hat, dem eine ebenfalls im Gehäuse angeordnete, aus mehreren räumlich getrennten Komponenten zusammengesetzte Abbildungsoptik, zugeordnet ist. Dabei besteht die Abbildungsoptik mindestens aus einer stationären Optik sowie einer auf einer optischen Achse vor dem Lichtempfänger angeordneten Umlenkoptik. Die Umlenkoptik ist über einen Schwenkarm in einer am Gehäuse angebrachten Drehachse gelagert, so dass bei Drehung des Schwenkarmes über eine Orts- und Winkelveränderung die wirksame optische Bildschnittweite verändert wird. Erfindungsgemäß ist in der am drehbaren Schwenkarm angebrachten Umlenkoptik eine, die Brennweite der Abbildungsoptik beeinflussende Optikkomponente integriert, so dass bei Drehung des Schwenkarmes neben der Veränderung der wirksamen optische Bildschnittweite auch die Brennweite der Abbildungsoptik veränderbar ist. Befinden sich die zu identifizierenden Objekte in unterschiedlichen Abständen vor der Identifikationseinrichtung, so kann durch eine Drehung des Schwenkarmes nicht nur ein exaktes Abbild auf den Lichtempfänger entworfen werden, sondern über die Veränderung der Brennweite der Abbildungsoptik kann auch die Bildgröße auf dem Lichtempfänger angepasst werden.

In einer vorteilhaften Ausbildung ist vorgesehen, dass die Umlenkoptik in Form eines schräggestellten Hohlspiegels oder Wölbspiegels ausgeführt ist. Damit wird sowohl eine Richtungsveränderung der optischen Achse, als auch ein Beitrag zur Beeinflussung der Brennweite der Abbildungsoptik von nur einem optischen Bauteil erzeugt, was hinsichtlich der Baugröße als auch der Herstellkosten von Vorteil ist.

In einer vorteilhaften Weiterbildung ist vorgesehen, dass die Oberflächenform des Hohl- oder des Wölbspiegel eine sphärische, asphärische, torische oder zylindrische Ausprägung besitzt. Auf diese Weise können eventuell auftretende Abbildungsfehler der Abbildungsoptik, wie zum Beispiel Öffnungsfehler oder Astigmatismus, korrigiert werden.

In einer weiteren Ausführungsform der Erfindung ist es vorgesehen, dass die Oberflächenform des Hohl- oder des Wölbspiegel als Off-Axis-System ausgebildet ist. Insbesondere dann, wenn die Schrägstellung des Hohl- oder des Wölbspiegels groß ist oder sich innerhalb des möglichen Verstellbereiches stark ändert, bietet diese außeraxiale Montage bei nichtsphärischen Spiegelformen einen weiteren Freiheitsgrad zur Korrektur von Abbildungsfehlern.

in Abhängigkeit von der erforderlichen Güte der Abbildungsoptik ist es nach der Erfindung vorgesehen, dass die Umlenkoptik aus einer Kombination von einem Spiegel und einer bzw. mehreren Linsen bzw. Linsenbaugruppen besteht. Damit kann die Funktion der Richtungsveränderung der optischen Achse und der Beitrag zur Beeinflussung der Brennweite der Abbildungsoptik auf mehrere optische Komponenten verteilt werden. Dadurch ist es möglich, den Zoom-Bereich der Abbildungsoptik bei gleichzeitig verbesserter Korrektur der Abbildungsfehler zu erhöhen.

In einer Weiterbildung des Erfindungsgedankens ist vorgesehen, bei der Kombination von einem Spiegel und einer bzw. mehreren Linsen bzw. Linsenbaugruppen sowohl konvexe als auch konkave Linsen mit sphärischen, asphärischen, torischen oder zylindrischen Oberflächenformen miteinander zu kombinieren.

Zur Unterdrückung von externem Störlicht haben derartige Identifikationssysteme in der Regel ein zusätzliches spektrales Filter, mit welchem die zum Lichtempfänger kommende optische Strahlung eingeschränkt wird. Erfindungsgemäß ist es vorgesehen, diese optische Filterwirkung mit einer Komponente der Umlenkoptik zu verbinden. Dies kann beispielsweise dadurch geschehen, dass der Umlenkspiegel oder eine Grenzfläche der Linsen mit einer selektiven spektralen Schicht versehen ist. Dadurch wird kein separates optisches Filter mehr benötigt, was sich hinsichtlich Kosten, Montageaufwand und dergleichen positiv auswirkt.

In einer vorteilhaften Weiterbildung ist vorgesehen, dass sich bei der Fokussierung durch die Bewegung des Schwenkarmes mit der Umlenkoptik das Bildzentrum auf dem Lichtempfänger nicht verschiebt. Das Beibehalten dieser Zuordnung von Bildzentrum und dem ortsauflösenden Lichtempfänger innerhalb des Fokussierbereiches bietet den Vorteil, dass sich damit die Richtung des Sichtbereiches nicht verändert. Die Identifikationseinrichtung ist dadurch in der Lage, neben der Identifikation des Objektinhaltes auch eine Aussage über die aktuelle Position des zu identifizierenden Objektes zu ermitteln.

Im Hinblick auf die Forderung nach einem schnellen und verschleißfreien Fokussiervorgangs ist es nach der Erfindung besonders vorteilhaft, dass mittels nur einer mechanischen Stellgröße für die Bewegung der Umlenkoptik sowohl die Veränderung der Bildschnittweite als auch der Brennweite der Abbildungsoptik durchführbar ist. Dies bedeutet zusätzüch, dass der zur Fokussierung notwendige Aufwand platzsparend und preiswert herstellbar ist.

Ein weiterer Vorteil der Erfindung ist darin zu sehen, dass die mechanische Koppelung des Schwenkarmes mit dem Gehäuse der Identifikationseinrichtung nur aus einem Drehgelenk besteht. Da dieses Drehgelenk nur innerhalb eines begrenzten Drehwinkelbereichs betrieben werden kann, kann das Drehgelenk durch ein flaches, flexibles Federband ersetzt werden. Damit ist eine sehr gut definierte, spielfreie Drehlagerfunktion gegeben, die auch über längere Zeiträume hinweg eine stabile, verschleißfreie Drehbewegung sicherstellt.

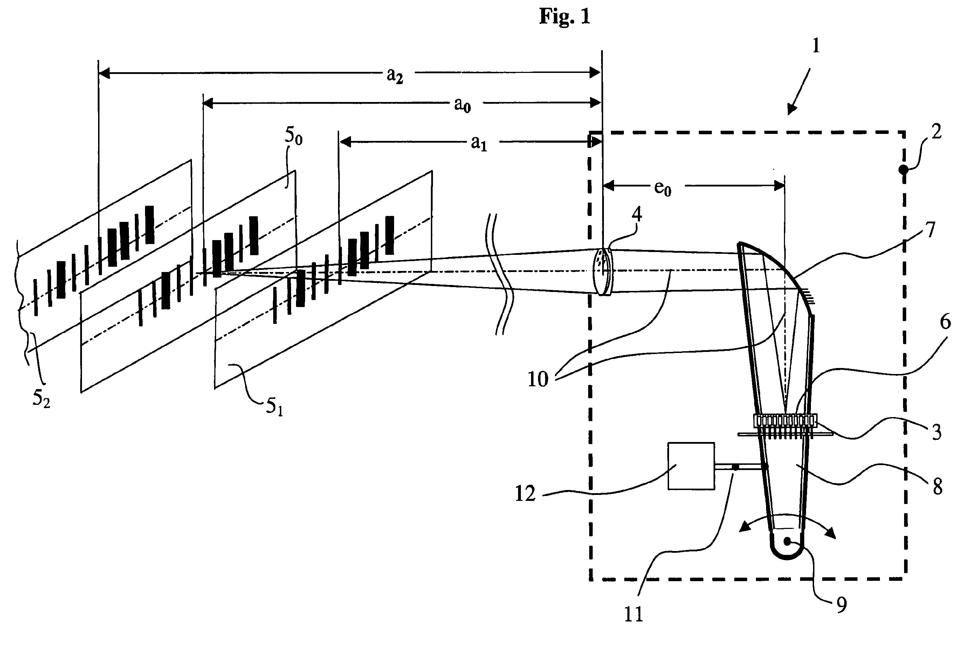

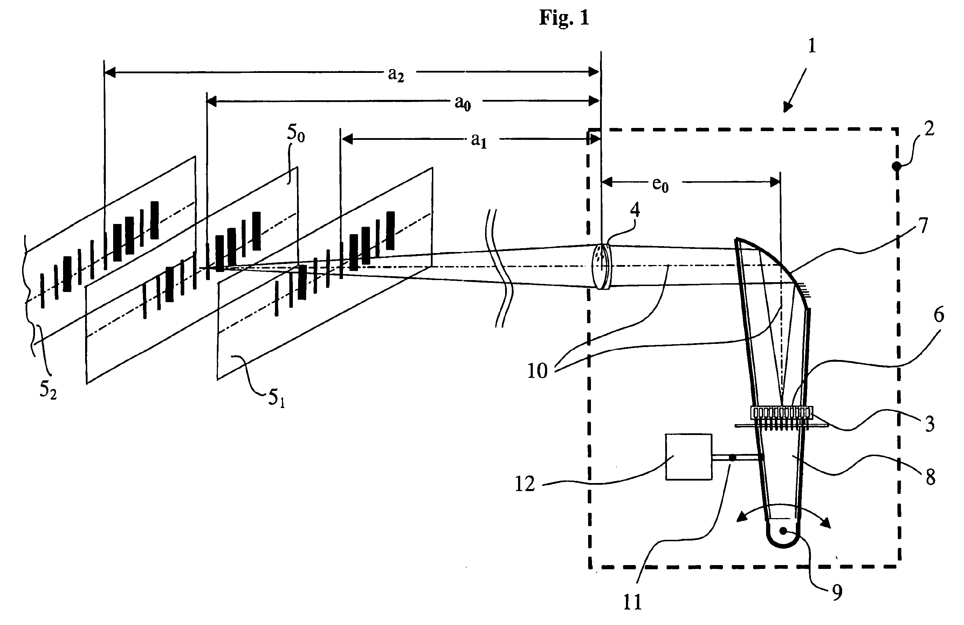

Die Erfindung wird im Folgenden beispielhaft unter Bezugnahme auf die Figuren 1 bis 4 erläutert, in denen jeweils eine schematische Seitenansicht einer Ausführungsform einer erfindungsgemäßen Identifikationseinrichtung mit einer Fokussierungseinrichtung gezeigt ist, bei der auf einem Schwenkarm eine Umlenkoptik angeordnet ist.

Dabei zeigt im Einzelnen:
- **Fig. 1**: Die Umlenkoptik in Form eines schräggestellten Hohlspiegels.
- **Fig. 2**: Die Umlenkoptik als Kombination einer vorgeordneten Konvexlinse und eines nachfolgenden schräggestellten Planspiegels.
- **Fig. 3**: Die Umlenkoptik als Kombination eines vorgeordneten schräggestellten Planspiegels und einer nachfolgenden Konvexlinse.
- **Fig. 4**: Die Umlenkoptik als Kombination einer vorgeordneten Konvexlinse eines schräggestellten Planspiegels und einer nachfolgenden Konkavlinse.

In Fig. 1 ist die Identifikationseinrichtung als Codeleser 1 beispielhaft dargestellt. Der Codeleser 1 besitzt in einem Gehäuse 2 einen ortsauflösenden Lichtempfänger 3. Dieser ortsauflösende Lichtempfänger 3 kann bei der Erfassung eines eindimensionalen Codes beispielsweise als eine CCD-Linie oder CMOS-Linie ausgebildet sein. Beim Einsatz des Codelesers zur Erfassung von zweidimensionalen Informationen ist der ortsauflösende Lichtempfänger 3 dann beispielsweise eine CCD-Fläche oder eine CMOS-Fläche.
Ebenfalls im Gehäuse 2 ist eine aus mehreren, räumlich getrennten Komponenten zusammengesetzte Abbildungsoptik eingebaut, die ein Abbild von einem Objekt 5₀ auf der Oberfläche 6 des ortsauflösenden Lichtempfängers 3 entwirft.
Abhängig von der Einsatzbedingung und der jeweiligen Aufgabenstellung des Codelesers wird das Objekt 5₀ zusätzlich von einer in der Fig. 1 nicht dargestellten Beleuchtungseinrichtung ausgeleuchtet. Diese Beleuchtungseinrichtung, die mit einer oder mehreren Lichtquellen ausgestattet ist, kann entweder im Codeleser 1 integriert sein oder ist als eine eigenständige externe Einheit ausgeführt.
Die Abbildungsoptik besteht aus mindestes einer feststehenden stationären Optik 4 sowie einer auf einer optischen Achse 10 vor dem Lichtempfänger 3 angeordneten Umlenkoptik, die über einen Schwenkarm 8 in einer am Gehäuse 2 angebrachten Drehachse 9 gelagert ist. Die in Fig. 1 dargestellte Umlenkoptik hat die Form eines um ca. 45° zum einfallenden Lichtstrahl schräggestellten Hohlspiegels 7. Dadurch lenkt der Hohlspiegel 7 die einfallende Strahlrichtung um ca. 90° in Richtung zu dem Lichtempfänger 3 um. Gleichzeitig entwirft der Hohlspiegel 7 zusammen mit der stationären Optik 4 ein Abbild vom Objekt 5₀, welches sich in einem Abstand a₀ vor der stationären Optik 4 befindet, auf den Lichtempfänger 3. Die Brennweite der Abbildungsoptik wird dabei bestimmt durch die Brennweite der stationären Optik 4, die Brennweite des Hohlspiegels 7 sowie dem Abstand e₀ zwischen diesen beiden Optikkomponenten. Verändert sich jedoch der Objektabstand von a₀ zu a₁ bzw. a₂, muss der Schwenkarm 8 um die Drehachse 9 verschwenkt werden, um ein exaktes Abbild der Objekte 5₁ bzw. 5₂ auf der Oberfläche 6 des ortsauflösenden Lichtempfängers 3 zu entwerfen. Da wie bereits erwähnt die Brennweite der Abbildungsoptik auch abhängig vom Abstand e zwischen diesen beiden Optikkomponenten ist, wird mit der Drehung des Schwenkarmes 8 auch die Brennweite und damit der Abbildungsmaßstab verändert. Der Abbildungsmaßstab ergibt sich aus dem Verhältnis der Objektbildweite zur Bildschnittweite. Durch diese Brennweitenänderung wird erreicht, dass das Abbild von unterschiedlich weit entfernten Objekten in annähernd gleicher Größe auf der Oberfläche 6 des ortsauflösenden Lichtempfängers 3 entsteht. Analog zu dem in Fig.1 dargestellten Hohlspiegel 7 ist es auch möglich, den Hohlspiegel 7 durch einen Wölbspiegel zu ersetzen. Dabei kann der Hohlspiegel bzw. der Wölbspiegel auch eine sphärische, asphärische, torische oder zylindrische Form haben oder als diffraktives Element ausgebildet sein. In besonderen Fällen ist es auch von Vorteil, wenn der Hohlspiegel bzw. der Wölbspiegel als Off-Axis-System ausgeführt ist.
Wird in der Umlenkoptik ein Hohlspiegel verwendet, dann wird die Brennweite der Abbildungsoptik mit Verringerung des Abstandes e verkleinert. Wird dagegen in der Umlenkoptik ein Wölbspiegel verwendet, dann wird die Brennweite der Abbildungsoptik mit Vergrößerung des Abstandes e reduziert. Im Gehäuse 2 eingebaut ist ein linearer Aktor 12, der über eine bewegliche Schubstange 11 mit dem Schwenkarm 8 verbunden ist. Der Aktor 12 ist somit in der Lage, den Schwenkarm 8 und damit die Umlenkoptik um die Drehachse 9 zu verschwenken. Neben dem in Fig.1 symbolisch dargestellten Aktor 12 sind auch weitere Aktoren zur Bewegung des Schwenkarmes möglich. So kann zum Beispiel an der Drehachse 9 ein zirkularer Aktor in Form eines Schrittmotors angeordnet werden. Grundsätzlich sind für die Bewegung des Schwenkarmes auch Magnettauchspulen, Pneumatik-/Hydraulikzylinder usw. denkbar.

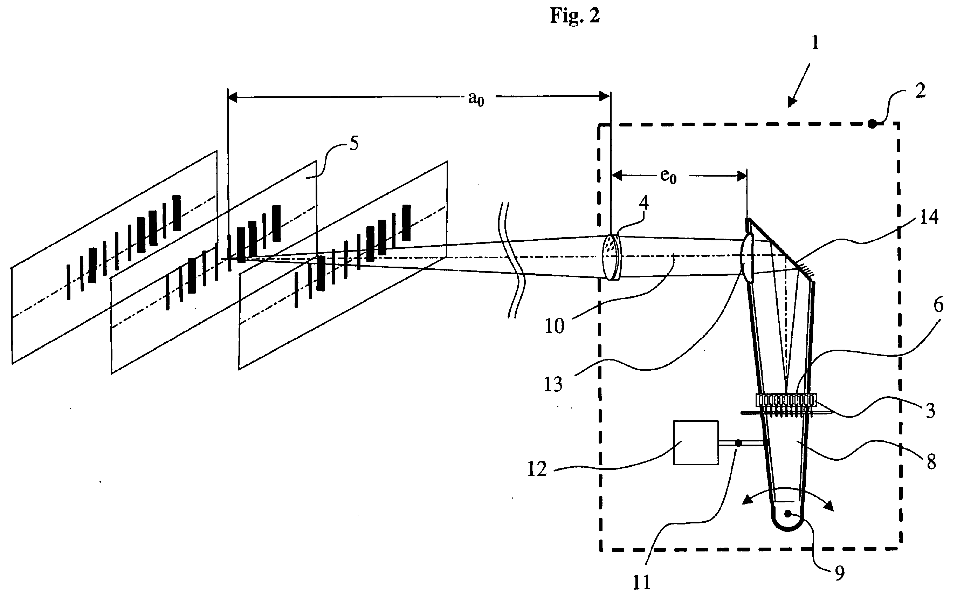

Die in Fig. 2 dargestellte Umlenkoptik besteht aus einer ersten Linse 13 und einem um ca. 45° zum einfallenden Lichtstrahl schräggestellten Planspiegel 14, die beide auf dem Schwenkarm 8 befestigt sind. Der Planspiegel 14 lenkt die einfallende Strahlrichtung um ca. 90° in Richtung zu dem Lichtempfänger 3 um. Gleichzeitig entwirft die Linse 13 zusammen mit der stationären Optik 4 ein Abbild vom Objekt 5₀ auf den Lichtempfänger 3. Die Brennweite der Abbildungsoptik, wird dabei bestimmt durch die Brennweite der stationären Optik 4, die Brennweite der Linse 13 sowie dem Abstand e₀ zwischen diesen Optikkomponenten.

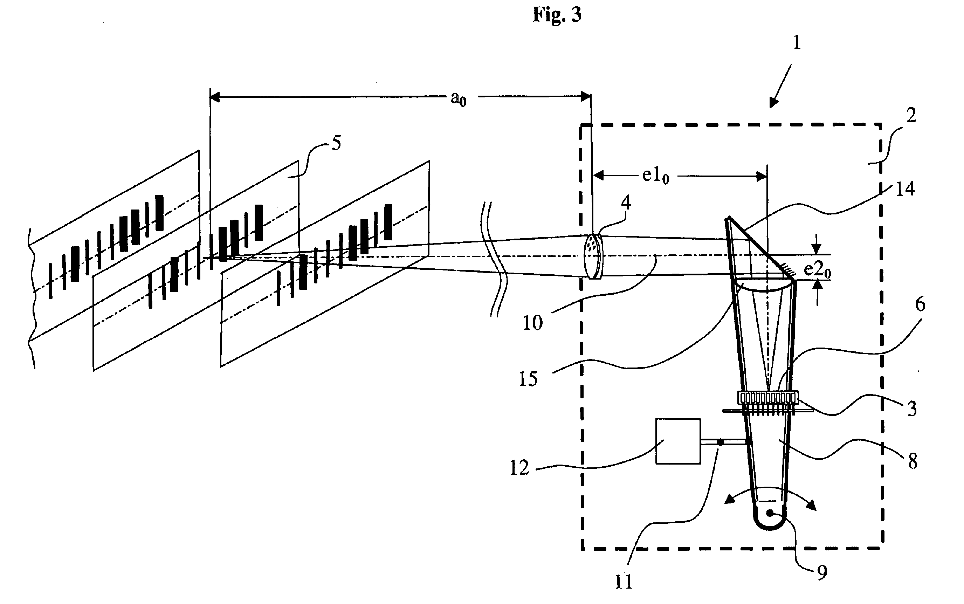

Wie in Fig. 3 dargestellt, ist es auch möglich, eine Linse 15 zwischen dem Planspiegel 14 und dem Lichtempfänger 3 anzuordnen. Mit einer Drehung des Schwenkarmes 8 verändert sich der Abstand e1₀ und damit auch die Summe der beiden Einzelabstände e1₀ und e2₀, welche entscheidenden Einfluss auf die Brennweite der Abbildungsoptik hat.

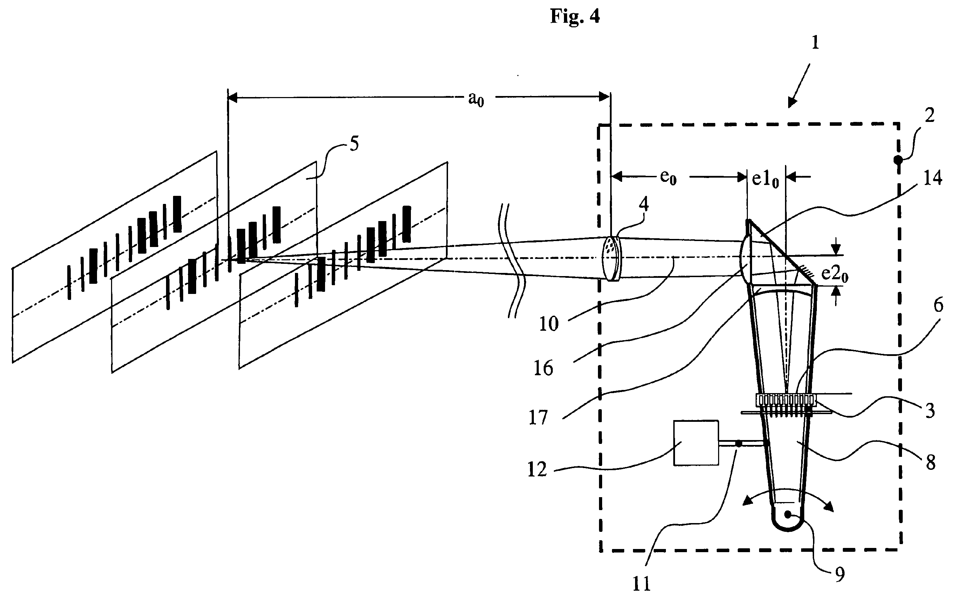

Eine hinsichtlich der Güte der Abbildungsoptik bevorzugte Variante der Umlenkoptik ist in Fig. 4 dargestellt. Hierbei sind die stationäre Optik 4, eine erste Linse 16, ein Planspiegel 14 und eine zweite Linse 17 beteiligt. In einer hier nicht dargestellten Variante ist die stationäre Optik auch durch zwei räumlich getrennte Komponenten ausgeführt, wodurch die Umlenkoptik dann auch innerhalb dieser stationären Optik angeordnet sein kann. Die Komponenten der Umlenkoptik, d. h. die erste Linse 16, der Planspiegel 14 und die zweite Linse 17 sind auf dem Schwenkarm 8 angeordnet und sind dadurch ortveränderlich im Gehäuse 2 angeordnet. Während sich der Abstand e₁ und e₂ von Linse 16 zu Linse 17 beim Verdrehen des Schwenkarmes 8 nicht ändert, wird der Abstand e₀ variieren, was wiederum eine Brennweitenveränderung zur Foige hat. In Abhängigkeit vom Drehwinkel des Schwenkarmes und der Anforderung an die Güte der Abbildungsoptik müssen die in der Umlenkoptik auftretenden Abbildungsfehler weitgehend korrigiert werden. Diese Fehler sind darin begründet, dass beim Verdrehen des Schwenkarmes das Lichtbündel nicht mehr annähernd rechtwinklig auf die Linsenmitte auftrifft, sondern je nach Drehwinkel mehr oder weniger abweichend vom rechten Winkel auftrifft und dabei gleichzeitig die Linsen auch außermittig durchläuft.
Bei der Linse 13 in Fig. 2 als auch bei der Linse 15 in Fig. 3 und den Linsen 16 bzw. 17 in Fig. 4 können selbstverständlich auch eine Linsengruppe, d. h. mehrere ggf. miteinander verbundene Linsen zum Einsatz kommen.

Mit der in Fig. 4 dargestellten Verwendung von einer ersten Linse 16 vor dem Planspiegel 14 und einer zweiten Linse 17 nach dem Planspiegel 14 stehen vier optische Grenzflächen zur Korrektur der Abbildungsfehler zur Verfügung. In einer weiteren, in Fig. 4 nicht dargestellten Ausführungsform, ist der Planspiegel 14 zwischen der ersten Linse 16 und der zweiten Linse 17 als Wölb- oder Hohlspiegel ausgeführt, so dass dadurch eine weitere optische Fläche zur Korrektur von Abbildungsfehlern zur Verfügung steht. Dabei ist es auch hier vorgesehen, dass zur Reduzierung von Abbildungsfehlern die beiden Linsen 16 und 17 eine sphärische, asphärische, torische oder zylindrische Form haben. In besonderen Fällen ist es dabei vorteilhaft, wenn die eine oder beide Linsen in Off-Axis-Anordnung ausgeführt sind.

## Patentansprüche

1. Identifikationseinrichtung, insbesondere zur Erfassung von ein- und/oder von zweidimensionalen Codes mit einem, in einem Gehäuse (2) angeordneten ortsauflösenden Lichtempfänger (3), einer diesem zugeordneten, ebenfalls im Gehäuse (2) angeordneten, aus mehreren Komponenten zusammengesetzten Abbildungsoptik, bestehend aus mindestens einer stationären Optik (4) sowie einer auf einer optischen Achse (10) vor dem Lichtempfänger (3) angeordneten Umlenkoptik, die über einen Schwenkarm (8) in einer am Gehäuse (2) angebrachten Drehachse (9) gelagert ist und bei Drehung über eine Orts- und Winkelveränderung die wirksame optische Bildschnittweite verändert, **dadurch gekennzeichnet, dass** die am ortveränderlichen Schwenkarm (8) angebrachte Umlenkoptik eine die Brennweite der Abbildungsoptik beeinflussende Wirkung hat, so dass sich bei Drehung des Schwenkarmes neben der Veränderung der wirksamen optischen Bildschnittweite auch die Brennweite (f) der Abbildungsoptik verändert.

2. Identifikationseinrichtung nach Anspruch 1, **dadurch gekennzeichnet, dass** die Umlenkoptik als ein schräggestellter Hohlspiegel ausgeführt ist.

3. Identifikationseinrichtung nach Anspruch 1, **dadurch gekennzeichnet, dass** die Umlenkoptik als ein schräggestellter Wölbspiegel ausgeführt ist.

4. Identifikationseinrichtung nach Anspruch 2 oder 3, **dadurch gekennzeichnet, dass** die Oberflächenform des Hohl- oder des Wölbspiegels sphärisch, asphärisch, torisch oder zylindrisch ist.

5. Identifikationseinrichtung nach einem der vorhergehenden Ansprüche, **dadurch gekennzeichnet, dass** die Oberflächenform des Hohl- oder des Wölbspiegels als Off-Axis-System ausgebildet ist.

6. ldentifikationseinrichtung nach einem der vorhergehenden Ansprüche, **dadurch gekennzeichnet, dass** die Umlenkoptik aus einer Kombination von mindestens einem Spiegel und mindestens einer Linse besteht.

7. Identifikationseinrichtung nach einem der vorhergehenden Ansprüche, **dadurch gekennzeichnet, dass** die Umlenkoptik aus einer Kombination von einem Spiegel und einer ersten Linse vor dem Spiegel und einer zweiten Linse nach dem Spiegel besteht.

8. Identifikationseinrichtung nach Anspruch 7, **dadurch gekennzeichnet, dass** die erste Linse vor dem Spiegel und/oder die zweite Linse nach dem Spiegel in Off-Axis-Lage zur Korrektur von Abbildungsfehlern ausgeführt sind.

9. Identifikationseinrichtung nach einem der vorhergehenden Ansprüche, **dadurch gekennzeichnet, dass** die Umlenkoptik aus einer Kombination von einem Spiegel und wenigstens einer Konvexlinse und/oder einer Konkavlinse besteht.

10. Identifikationseinrichtung nach einem der vorhergehenden Ansprüche, **dadurch gekennzeichnet, dass** eine Komponente der Umlenkoptik, insbesondere der Umlenkspiegel zusätzlich eine spektrale Filterwirkung aufweist.

11. Identifikationseinrichtung nach einem der vorhergehenden Ansprüche, **dadurch gekennzeichnet, dass** die Linsen der Umlenkoptik eine sphärische, asphärische, torische oder zylindrische Oberflächenform haben.

12. Identifikationseinrichtung nach einem der vorhergehenden Ansprüche, **dadurch gekennzeichnet, dass** bei Bewegung des Schwenkarmes das Zentrum des Abbildes auf dem Lichtempfänger nahezu unverändert ist.

13. Identifikationseinrichtung nach einem der vorhergehenden Ansprüche, **dadurch gekennzeichnet, dass** die mechanische Stellgröße zur Bewegung des Schwenkarmes von einem linearen oder zirkularen Aktor auslösbar ist.

14. ldentifikationseinrichtung nach einem der vorhergehenden Ansprüche, **dadurch gekennzeichnet, dass** das Drehgelenk des Schwenkarmes mindestens ein flaches, flexibles Federband aufweist, welches mit seinen beiden Enden mit den gegeneinander zu verdrehenden Teilen verbunden ist.

15. Identifikationseinrichtung nach einem der vorhergehenden Ansprüche, **dadurch gekennzeichnet, dass** die stationäre Optik durch zwei räumlich getrennte Komponenten ausgeführt, wodurch die Umlenkoptik auch innerhalb dieser stationären Optik angeordnet sein kann.

## Claims

1. Identification apparatus, in particular for reading one- and/or two-dimensional codes with a spatially resolving light receiver (3) arranged in a housing (2), imaging optics which is assigned thereto, likewise arranged in the housing (2) and is made up of a plurality of components, the imaging optics comprising at least one stationary optics (4) and a deflection optics which is arranged on an optical axis (10) upstream of the light receiver (3) and mounted via a pivot arm (8) in a pivot axis (9) arranged on the housing (2) such that, by pivoting the pivot arm, the effective optical back focal length is spatially and angularly changed, **characterized in that** the deflection optics mounted on the positionally variable pivot arm (8) influences the focal length of the imaging optics so that, upon pivoting the pivot arm, the focal length (f) of the imaging optics can also be changed, in addition to the change in the effective optical back focal length.

2. Identification apparatus according to Claim 1, **characterized in that** the deflection optics comprises an inclined concave mirror.

3. Identification apparatus according to Claim 1, **characterized in that** the deflection optics comprises an inclined convex mirror.

4. Identification apparatus according to Claim 2 or 3, **characterized in that** the concave or convex mirror has a spherical, aspherical, toroidal or cylindrical surface configuration.

5. Identification apparatus according to one of the preceding claims, **characterized in that** the surface configuration of the concave or convex mirror is off-axis.

6. Identification apparatus according to one of the preceding claims, **characterized in that** the deflection optics comprises a combination of at least one mirror and at least one lens.

7. Identification apparatus according to one of the preceding claims, **characterized in that** the deflection optics comprises a combination of a mirror and a first lens upstream of the mirror and a second lens downstream of the mirror.

8. Identification apparatus according to Claim 7, **characterized in that** the first lens upstream of the mirror and/or the second lens downstream of the mirror in the off-axis position are constructed for the correction of imaging errors.

9. Identification apparatus according to one of the preceding claims, **characterized in that** the deflection optics comprises a combination of a mirror and at least one of a convex lens and a concave lens.

10. Identification apparatus according to one of the preceding claims, **characterized in that** a component of the deflection optics, in particular the deflecting mirror, additionally comprises a spectral filter.

11. Identification apparatus according to one of the preceding claims, **characterized in that** the lenses of the deflection optics have a spherical, aspherical, toroidal or cylindrical surface configuration.

12. Identification apparatus according to one of the preceding claims, **characterized in that** movements of the pivot arm do not substantially change the centre of the image on the light receiver.

13. Identification apparatus according to one of the preceding claims, **characterized in that** the mechanical parameter for the movement of the pivot arm can be triggered by a linear or a rotary actuator.

14. Identification apparatus according to one of the preceding claims, **characterized in that** the pivot joint of the pivot arm has at least one flat, flexible spring band which is connected at its two ends to components that are to be pivoted relative to each other.

15. Identification apparatus according to one of the preceding claims, **characterized in that** the stationary optics is designed by two spatially separate components whereby the deflection optics can also be arranged inside this stationary optics.

## Revendications

1. Dispositif d'identification, destiné notamment à la saisie de codes à une et/ou à deux dimensions, comportant un récepteur de lumière (3) à résolution locale disposé dans un boîtier (2), une optique de reproduction composée de plusieurs composants associée à celui-ci, également disposée dans le boîtier (2), qui est constituée d'au moins une optique stationnaire (4) ainsi que d'une optique de déviation disposée sur un axe optique (10) devant le récepteur de lumière (3), laquelle est montée dans un axe de rotation (9) fixé sur le boîtier (2) par l'intermédiaire d'un bras pivotant (8) et qui, lors de la rotation, modifie le tirage optique efficace par l'intermédiaire d'une modification locale et angulaire, **caractérisé en ce que** l'optique de déviation fixée sur le bras pivotant (8) mobile exerce un effet influençant la distance focale de l'optique de reproduction de sorte que, lors de la rotation du bras pivotant et, outre la modification du tirage optique efficace, la distance focale (f) de l'optique de reproduction se modifie également.

2. Dispositif d'identification selon la revendication 1, **caractérisé en ce que** l'optique de déviation est réalisée sous la forme d'un miroir creux positionné à l'oblique.

3. Dispositif d'identification selon la revendication 1, **caractérisé en ce que** l'optique de déviation est réalisée sous la forme d'un miroir convexe positionné à l'oblique.

4. Dispositif d'identification selon la revendication 2 ou 3, **caractérisé en ce que** la forme de la surface du miroir creux ou convexe est sphérique, non sphérique, torique ou cylindrique.

5. Dispositif d'identification selon l'une des revendications précédentes, **caractérisé en ce que** la forme de la surface du miroir creux ou convexe est réalisée en tant que système Off-Axis.

6. Dispositif d'identification selon l'une des revendications précédentes, **caractérisé en ce que** l'optique de déviation est constituée d'une combinaison d'au moins un miroir et d'au moins une lentille.

7. Dispositif d'identification selon l'une des revendications précédentes, **caractérisé en ce que** l'optique de déviation est constituée d'une combinaison d'un miroir et d'une première lentille en amont du miroir, et d'une deuxième lentille en aval du miroir.

8. Dispositif d'identification selon la revendication 7, **caractérisé en ce que** la première lentille en amont du miroir et/ou la deuxième lentille en aval du miroir sont réalisées en position Off-Axis pour la correction de défauts de reproduction.

9. Dispositif d'identification selon l'une des revendications précédentes, **caractérisé en ce que** l'optique de déviation est constituée d'une combinaison d'un miroir et d'au moins une lentille convexe et/ou d'une lentille concave.

10. Dispositif d'identification selon l'une des revendications précédentes, **caractérisé en ce qu'**un composant de l'optique de déviation, notamment le miroir de déviation, possède un effet de filtre spectral supplémentaire.

11. Dispositif d'identification selon l'une des revendications précédentes, **caractérisé en ce que** les lentilles de l'optique de déviation ont une surface de forme sphérique, non sphérique, torique ou cylindrique.

12. Dispositif d'identification selon l'une des revendications précédentes, **caractérisé en ce que**, lors du mouvement du bras pivotant, le centre de l'image est quasiment inchangé sur le récepteur de lumière.

13. Dispositif d'identification selon l'une des revendications précédentes, **caractérisé en ce que** la grandeur de réglage mécanique pour le mouvement du bras pivotant peut être déclenchée par un actionneur linéaire ou circulaire.

14. Dispositif d'identification selon l'une des revendications précédentes, **caractérisé en ce que** l'articulation à charnière du bras pivotant comporte au moins une bande à ressort flexible plate, dont les deux extrémités sont reliées aux parties à pivoter les unes par rapport aux autres.

15. Dispositif d'identification selon l'une des revendications précédentes, **caractérisé en ce que** l'optique stationnaire est réalisée par deux composants séparés dans l'espace, moyen par lequel l'optique de déviation peut également être disposée à l'intérieur de cette optique stationnaire.
